# EUROPEAN PATENT SPECIFICATION

(11) **EP 2 647 526 B1**
(45) Date of publication and mention of the grant of the patent: **22.05.2019**
(21) Application number: 13161825.8
(22) Date of filing: 29.03.2013
(51) Int. Cl.: B60Q 1/00

(54) **VEHICLE LAMP DEVICE**
FAHRZEUGLAMPENVORRICHTUNG
DISPOSITIF DE PHARE DE VÉHICULE

(30) Priority: 02.04.2012 JP 2012083526
(43) Date of publication of application: 09.10.2013
(73) Proprietor: Koito Manufacturing Co., Ltd., Tokyo 108-8711 (JP)
(72) Inventor: Mikuni, Satoru, SHIZUOKA-SHI, SHIZUOKA (JP)
(74) Representative: Intès, Didier Gérard André

(56) References cited:
- EP-A1- 1 211 456
- FR-A1- 2 883 361
- FR-A1- 2 936 459
- US-A- 6 161 951

## Description

### BACKGROUND

### 1. Technical Field

The invention relates to a vehicle lamp device and, more particularly, to a vehicle lamp device for use in a vehicle such as an automobile.

### 2. Description of the Related Art

In a related art, there has been a light distribution variable type vehicle headlamp device which forms a low-beam light distribution pattern when light from a light source is blocked with a shade and a high-beam light distribution pattern when the light is not blocked with the shade. Further, with the advance in performance of vehicles in recent years, such a vehicle headlamp device has been suggested that forms a special light distribution pattern different from the shape of the standard low-beam or that of the standard high-beam in accordance with the surrounding conditions. Particularly, with regard to the high-beam, it is necessary to consider glare which causes unconvenience to oncoming vehicles and/or pedestrians while improving the visibility of a driver. Therefore, for example, a vehicular lamp described in JP 2007-179969 A (corresponding to US 2007/0147055 A1) has a structure which can optimally set an illumination area of high-beam in accordance with presence or absence of pedestrians, preceding vehicles and/or oncoming vehicles. Other headlamp examples are disclosed in US 6,161,951 and EP 1 211 456.

### SUMMARY

In such a situation, the inventor came to recognize the following issues. That is, as an optical unit to implement the switching between the above-described light distribution patterns in a vehicular lamp, for example, such a configuration may be conceived that a plurality of shades are provided each of which is movable between an advanced position where a portion of light from a light source is blocked and a retreated position where the portion of the light from the light source is not blocked and that the light distribution pattern is switched by switching the position of each shade. Specifically, for example, a low-beam light distribution pattern is formed by placing a first shade in a blocking position, a special light distribution pattern is formed by placing a second shade in the blocking position and placing the first shade in a non-blocking position, and a high-beam light distribution pattern is formed by placing both the first shade and the second shade in the non-blocking positions. A motor such as DC motor may be used to move the shades. Driving the motor is controlled based on a control signal output from a control module.

Here, it may be conceived that different shade controls are performed for left and right units. For example, it may be conceived that different light distribution patterns are formed by the left side unit, which is disposed on the left side of the vehicle, and the right side unit, which is disposed on the right side of the vehicle. In this case, it is necessary to mount a dedicated control module on each of the left side unit and the right side unit.

In a case where the dedicated control module is mounted on each of the left and right side units, it is naturally required to properly mount a control module for the left side unit in the left side unit and a control module for the right side unit in the right side unit, at the time of manufacturing a vehicle lamp device.

The invention has been made in view of the above circumstances and provides a technique that enables the control module for the left side unit and the control module for the right side unit to be mounted on suitable units in a vehicle lamp device including the left side unit, which is disposed on the left side of the vehicle, and the right side unit, which is disposed on the right side of the vehicle.

According to the invention, a vehicle lamp device includes a left side unit and a right side unit. The left side unit is to be disposed on a left side of a vehicle. The right side unit is to be disposed on a right side of the vehicle. The left side unit includes a first control module and a first accommodation chamber. The first control module controls an operation of the left side unit. The first accommodation chamber is formed with a first opening through which the first control module is configured to be removably inserted into the first accommodation chamber. The first accommodation chamber accommodates the first control module. The right side unit includes a second control module and a second accommodation chamber. The second control module controls an operation of the right side unit. The second accommodation chamber is formed with a second opening through which the second control module is configured to be removably inserted into the second accommodation chamber. The second accommodation chamber accommodates the second control module. The first control module includes a housing having a contour shape in section perpendicular to a direction in which the first control module is removably inserted into the first accommodation chamber. The contour shape of the housing of the first control module is similar to a contour shape of the first opening. The second control module includes a housing having a contour shape in section perpendicular to a direction in which the second control module is removably inserted into the second accommodation chamber. The contour shape of the housing of the second control module is similar to a contour shape of the second opening. The first opening has, in a part of the contour shape thereof, a first right-left discrimination part that allows the first control module to enter the first accommodation chamber through the first opening and that restricts the second control module from entering the first accommodation chamber through the first opening. The second opening has, in a part of the contour shape of thereof, a second right-left discrimination part that allows the second control module to enter the second accommodation chamber through the second opening and that restricts the first control module from entering the second accommodation chamber through the second opening.

With this configuration, it is possible to mount the control module for the right side unit and the control module for the left side unit on suitable units.

In the above configuration, each of the first opening and the second opening may have a contour whose base shape is a rectangular shape. Each of the first right-left discrimination part and the second right-left discrimination part may be formed by chamfering a corner of the corresponding rectangular shape. Thereby, the first right-left discrimination part and the second right-left discrimination part can be simply formed. Therefore, it is possible to suppress the complexity of the manufacturing process of the vehicle lamp device.

According to the invention, in a vehicle lamp device including a right unit disposed on a right side of a vehicle and a left unit disposed on a left side of the vehicle, it is possible to provide a technique which is capable of mounting a control module for the right unit and a control module for the left unit on suitable units, respectively.

### BRIEF DESCRIPTION OF THE DRAWINGS

Fig. 1 is a front view schematically showing a schematic structure of a vehicle lamp device according to an embodiment.
Fig. 2 is a schematic sectional view taken along a line II-II in Fig. 1.
Fig. 3 is a perspective view showing a schematic structure in the vicinity of an accommodation chamber in a lamp body of a left side unit.
Fig. 4A is an enlarged perspective view showing a portion in the vicinity of the accommodation chamber of the left side unit.
Fig. 4B is an enlarged front view showing the portion in the vicinity of the accommodation chamber of the left side unit.
Fig. 5A is a perspective view showing a schematic structure of a first control module.
Fig. 5B is a front view showing a schematic structure of the first control module.
Fig. 6 is a perspective view showing a schematic structure in the vicinity of an accommodation chamber in a lamp body of a right side unit.
Fig. 7A is an enlarged perspective view showing a portion in the vicinity of the accommodation chamber of the right side unit.
Fig. 7B is an enlarged front view showing the portion in the vicinity of the accommodation chamber of the right side unit.
Fig. 8A is a perspective view showing a schematic structure of a second control module.
Fig. 8B is a front view showing a schematic structure of the second control module.

### DETAILED DESCRIPTION

Hereinafter, suitable embodiments of the invention will be described with reference to the accompanying drawings. The same or similar reference numerals are allocated to the same or similar elements, parts, and process shown in the drawings, and redundant description thereon will be omitted. Also, the embodiments are illustrative and not intended to limit the invention. It should be noted that all the features and their combinations described in the embodiments are not necessarily regarded as an essential part(s) of the invention.

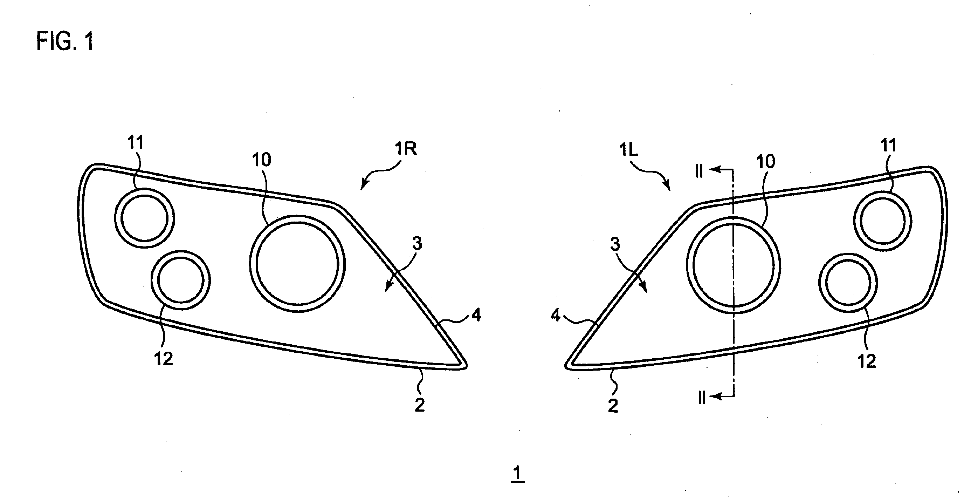

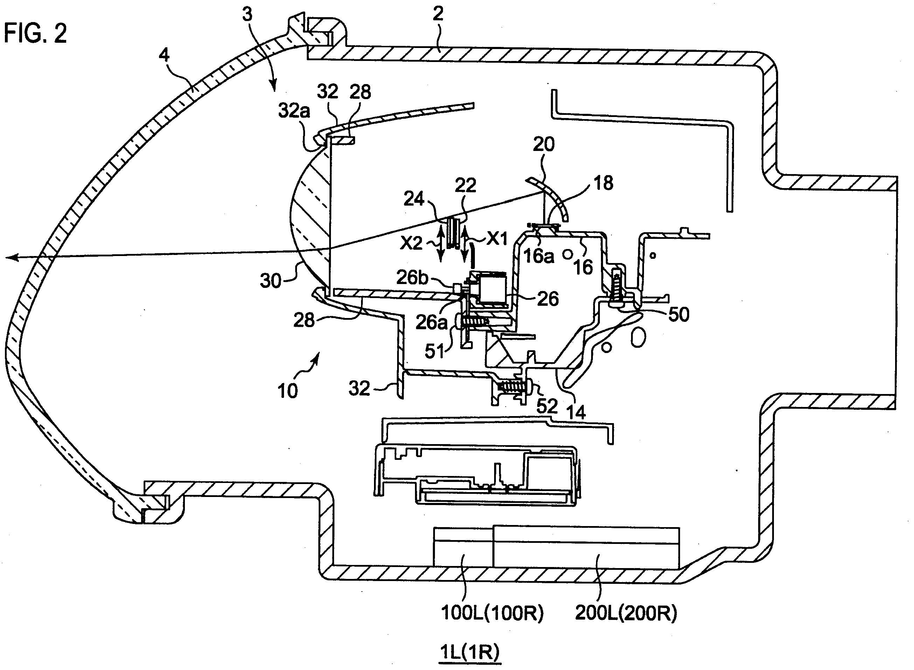

Fig. 1 is a front view schematically showing a schematic structure of a vehicle lamp device according to an embodiment. Fig. 2 is a schematic sectional view taken along a line II-II in Fig. 1. Here, a vehicle headlamp device including a pair of headlamp units which are disposed on the left and right sides of a front part of a vehicle will be described as an example of a vehicle lamp device 1 according to this embodiment.

The vehicle lamp device 1 according to this embodiment includes a left side unit 1L disposed on the left side of the vehicle and a right side unit 1R disposed on the right side of the vehicle. Since the configuration of the left side unit 1L and that of the right side unit 1R are basically the same except having a bilaterally symmetric structure, a lamp unit to be accommodated in a unit will be described with reference to the left side unit 1L, and detailed description on the right side unit 1R will be omitted. Also, since the structures of lamp units 11 and lamp units 12 which are accommodated in the left side unit 1L and the right side unit 1R have been known, detailed description thereon will omitted.

The left side unit 1L includes a lamp body 2 formed with an opening on a front side of the vehicle and a light transmissive cover 4 attached to cover the opening of the lamp body 2. The lamp units 10 to 12 and a first control module 100L are accommodated in a lamp chamber 3 which is defined by the lamp body 2 and the light transmissive cover 4. The lamp unit 10 is attached to a bracket 14. The bracket 14 is fixed to the lamp body 2 by a support mechanism (not shown). A first accommodation chamber 200L is provided in a lower part of the lamp body 2. The first control module 100L is accommodated in the first accommodation chamber 200L. It is noted that in the right side unit 1R, a second control module 100R is accommodated in a second accommodation chamber 200R.

The lamp unit 10 includes a heat sink 16, a light source module 18, a reflector 20, a first shade 22, a second shade 24, a shade driving part 26, a lens holder 28, a projection lens 30, and a cover member 32.

The heat sink 16 is attached to the bracket 14 by a fastening member 50 such as a screw. The heat sink 16 includes a light source module mounting surface 16a facing upward in a direction substantially perpendicular to an optical axis of the lamp unit 10. The light source module 18 is mounted on the light source module mounting surface 16a. The light source module 18 is a light emitting diode (LED), for example. The reflector 20 has a substantially dome shape, is disposed above the light source module 18, and is fixed to the heat sink 16. The reflector 20 is provided on its inner side with a reflective surface which is configured by a part of a spheroidal surface. The reflective surface includes a first focal point and a second focal point which is located on the front side of the lamp relative to the first focal point. A positional relationship between the reflector 20 and the light source module mounting surface 16a is established so that a light emitting part of the light source module 18 substantially coincides with the first focal point of the reflector 20.

The first shade 22 and the second shade 24 are disposed on the front side of the lamp relative to the reflector 20. The first shade 22 and the second shade 24 are movable, independently from each other, in directions indicated by arrows X1 and X2 in Fig. 2. Each of the first shade 22 and the second shade 24 can be in an advanced position (a state shown in Fig. 2) where an upper edge of each shade is close to the optical axis. Also, each of the first shade 22 and the second shade 24 can be in a retreated position where the upper edge of each shade is far away from the optical axis and is below the optical axis. The first shade 22 and the second shade 24 are disposed so that when the first shade 22 and the second shade 24 are in the advanced positions, the respective upper edges thereof substantially overlap with the second focal point of the reflective surface of the reflector 20.

The upper edge of the first shade 22 is processed to form a cut-off line of a low-beam light distribution pattern when the first shade 22 is in the advanced position. The upper edge and side edge of the second shade 24 are processed to form a cut-off line of one-side high light distribution pattern when the second shade 24 is in the advanced position. The left side unit 1L forms the low-beam light distribution pattern when the first shade 22 is in the advanced position. Also, the left side unit 1L forms a so-called left-side high light distribution pattern having a high-beam area only on the own-vehicle lane side during the left-hand traffic when the first shade 22 is in the retreated position and the second shade 24 is in the advanced position. Furthermore, the left side unit 1L forms a high-beam light distribution pattern when the first shade 22 and the second shade 24 are in the retreated positions. Here, the lamp unit 10 of the right side unit 1R forms the low-beam light distribution pattern, the high-beam light distribution pattern, and a so-called right-side high light distribution pattern having a high-beam area only on the oncoming-vehicle lane side during the left-hand traffic. The shapes of respective light distribution patterns described above have been known. Therefore, detailed description thereon will be omitted.

The first shade 22 and the second shade 24 are respectively connected to shade driving parts 26 that moves the shades 22, 24 between the advanced positions and the retreated positions. Each shade driving part 26 is implemented by a motor such as a DC motor, for example. A connection part 26b configured by a gear such as a spur gear is provided at a leading end of an output shaft 26a of each shade driving part 26. Meanwhile, a gear part (not shown) to be meshed with the connection part 26b is provided in the lower end portion of each shade. The connection parts 26b are meshed with the gear parts to thereby connect the shade driving parts 26 to the first shade 22 and the second shade 24.

The lens holder 28 is disposed on the front side of the lamp relative to the first shade 22 and the second shade 24. The projection lens 30 is fitted to the lens holder 28. The projection lens 30 is formed of a plano-convex aspherical lens having a convex front surface and a flat rear surface. The projection lens projects a light source image formed on a back focal plane including a back focal point onto a virtual vertical screen in front of the lamp as an inverted image. The lens holder 28 holds the projection lens 30 at a position on an optical axis of the lamp unit 10, where its back focal point is substantially matched with the second focal point of the reflective surface of the reflector 20. The lens holder 28 is fixed to the heat sink 16 by a fastening member 51 such as a screw. The cover member 32 is disposed on an outer periphery of the lens holder 28. The cover member 32 is formed with an opening 32a that allows irradiation light from the lamp unit 10 to pass therethrough and is fixed to the heat sink 16 by a fastening member 52 such as a screw.

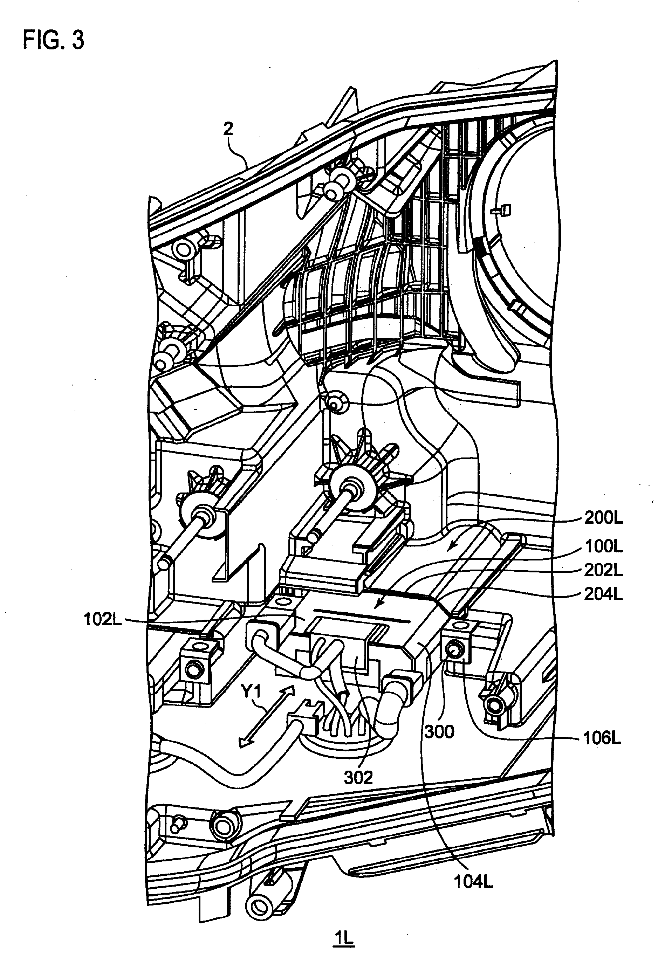

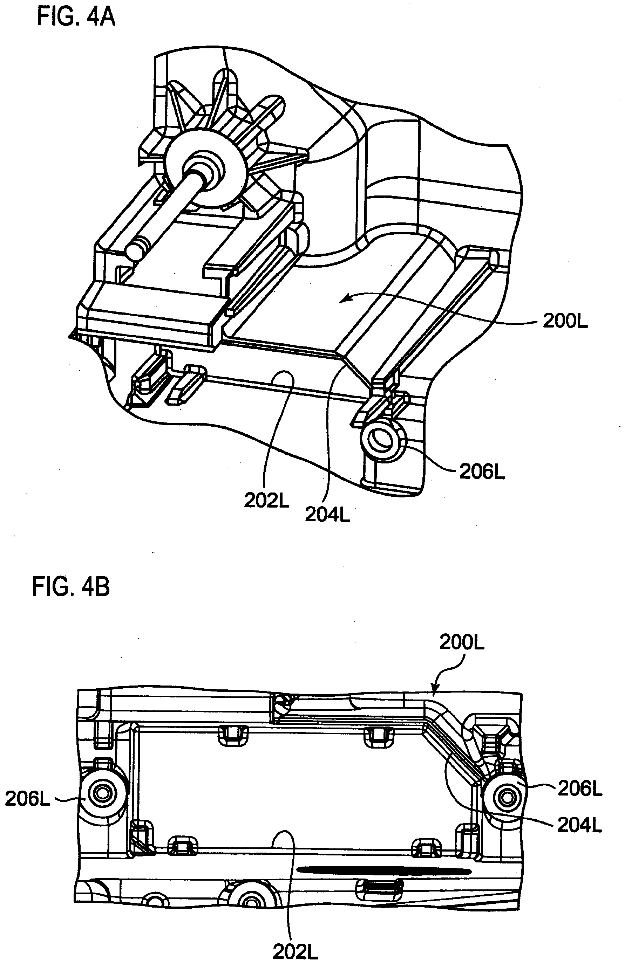

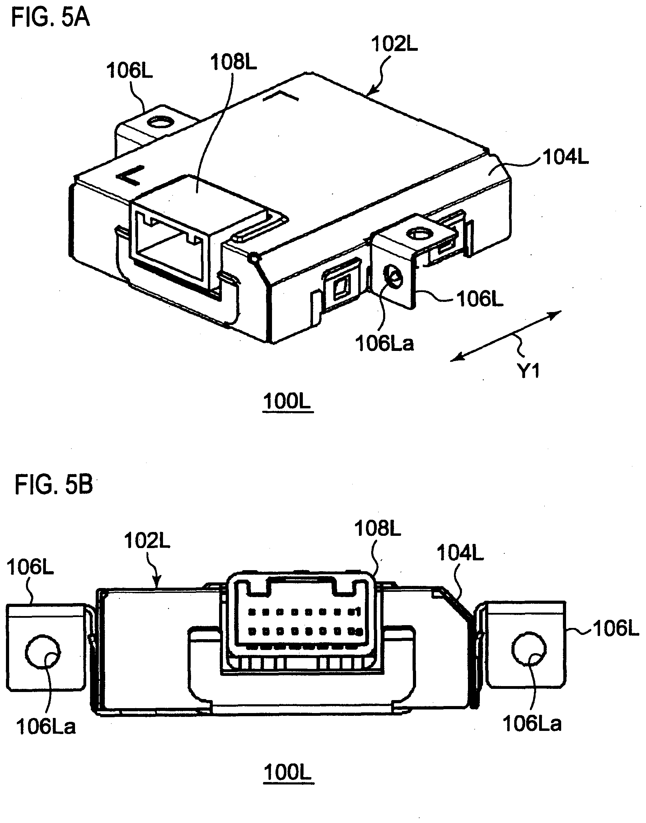

Next, the structure of the control module and the accommodation chamber will be described in detail. Fig. 3 is a perspective view showing a schematic structure in the vicinity of the accommodation chamber in the lamp body of the left side unit. Fig. 4A is an enlarged perspective view showing a portion in the vicinity of the accommodation chamber of the left side unit. Fig. 4B is an enlarged front view showing the portion in the vicinity of the accommodation chamber of the left side unit. Fig. 5A is a perspective view showing a schematic structure of the first control module. Fig. 5B is a front view showing a schematic structure of the first control module.

As shown in Fig. 3, Fig. 4A and Fig. 4B, the left side unit 1L includes the first accommodation chamber 200L in the lower space of the lamp body 2. The first accommodation chamber 200L is provided on an inner side surface of a bottom wall of the lamp body 2. The first control module 100L is accommodated in the first accommodation chamber 200L (see Fig. 3). The first control module 100L is inserted into and removed from the first accommodation chamber 200L in a direction indicated by an arrow Y1 in Fig. 3.

The first accommodation chamber 200L is formed with a first opening 202L through which the first control module 100L is removably inserted. In this embodiment, the first opening 202L faces the front side of the lamp. Also, the first opening 202L has a first right-left discrimination part 204L in a part of a contour shape of the first opening 202L. The first right-left discrimination part 204L allows the first control module 100L to enter through the first opening 202L and restricts the second control module 100R from entering through the first opening 202L. In this embodiment, the first opening 202L has the contour whose base shape is a rectangular shape. A part of the contour of the first opening 202L located inside the rectangular shape, which is the base shape, constitutes the first right-left discrimination part 204L. In this embodiment, the first right-left discrimination part 204L has a shape formed by chamfering a corner of the rectangular shape. Specifically, an upper right corner of the first opening 202L is chamfered when viewed from the front side of the lamp, to form the first right-left discrimination part 204L. The first right-left discrimination part 204L extends from an end of the first accommodation chamber 200L on the front side of the lamp to an end of the first accommodation chamber 200L on the rear side of the lamp. Insertion holes 206L for fixing the first control module are formed at predetermined positions on the outer periphery of the first accommodation chamber 200L.

As shown in Fig. 5A and Fig. 5B, the first control module 100L includes a housing 102L in which a substrate is accommodated. A circuit(s) and a device(s) such as a CPU to execute various operations, a ROM to store various control programs, and a RAM used as a work area to store data and/or execute program are mounted on the substrate. The first control module 100L is a control unit that controls an operation of the left side unit 1L. More specifically, the first control module 100L controls turning on/off of the lamp units 10 to 12 accommodated in the left side unit 1L and controls the moving of the first shade 22 and the second shade 24 of the lamp unit 10 by controlling driving of the shade driving parts 26.

A contour shape (see Fig. 5B) of the housing 102L in section perpendicular to the (the direction indicated by the arrow Y1 in Figs. 3 and 5A) in which the housing 102L is inserted into and removed from the first accommodation chamber 200L is similar to that of the first opening 202L. Therefore, the housing 102L includes a feature part 104L at a position, corresponding to the first right-left discrimination part 204L of the first opening 202L, on the contour thereof. Here, the feature part 104L has a shape corresponding to the first right-left discrimination part 204L. In this embodiment, the housing 102L has the contour whose base shape is a rectangular shape, and a part of the contour of the housing 102L located inside the rectangular shape, which the base shape, constitutes the feature part 104L. In this embodiment, the feature part 104L has a shape formed by chamfering a corner of the rectangular shape. Specifically, an upper right corner of the housing 102L is chamfered when viewed from the front side of the lamp, to form the feature part 104L. The feature part 104L extends from an end of the housing 102L on the front side of the lamp to an end of the housing 102L on the rear side of the lamp. The feature part 104L may be formed by bending a metal plate constituting the housing 102L, for example.

Attachment parts 106L having insertion holes 106La are provided at predetermined positions on the outer periphery of the housing 102L. Also, a connector 108L is mounted on the substrate accommodated in the housing 102L on the front side of the lamp and is exposed to the outside of the housing 102L.

When the first control module 100L is inserted into the first accommodation chamber 200L, a posture of the first control module 100L is determined such that the connector 108L faces the front side of the lamp and a position of the feature part 104L coincides with a position of the first right-left discrimination part 204L, that is, the feature part 104L is located on an upper right side when viewed from the front side of the lamp. Then, the first control module 100L enters the first accommodation chamber 200L through the first opening 202L in a state where the feature part 104L and the first right-left discrimination part 204L are engaged with each other. As shown in Fig. 3, the insertion holes 206L for fixing the first control module and the insertion holes 106La of the attachment parts 106L overlap with each other in a state where the first control module 100L is accommodated in the first accommodation chamber 200L, and the first control module 100L is fixed to the lamp body 2 by inserting a fastening member 300 such as a screw is inserted into the insertion holes 106La, 206L. Then, a connection terminal 302 for transmitting and receiving control signals to and from the outside is connected to the connector 108L.

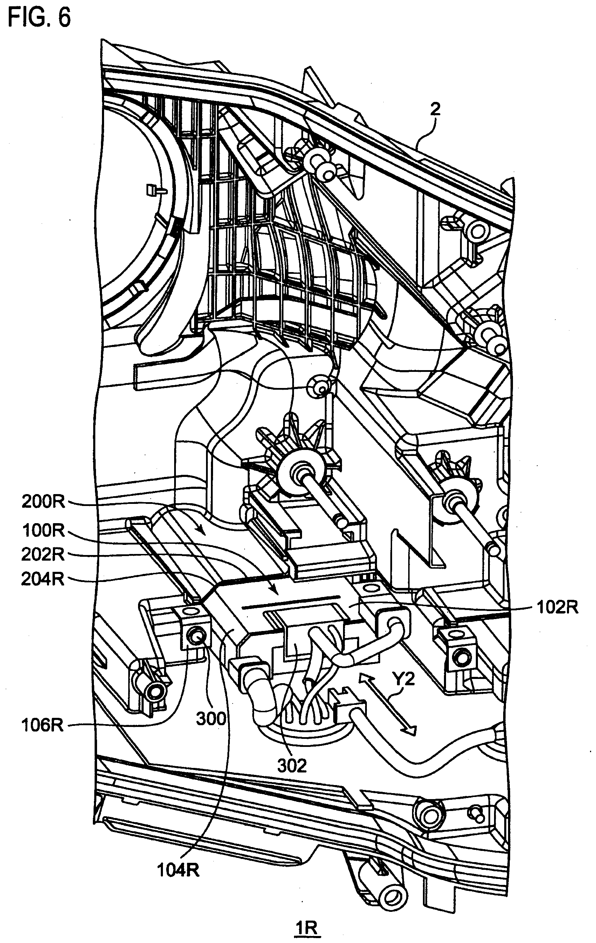

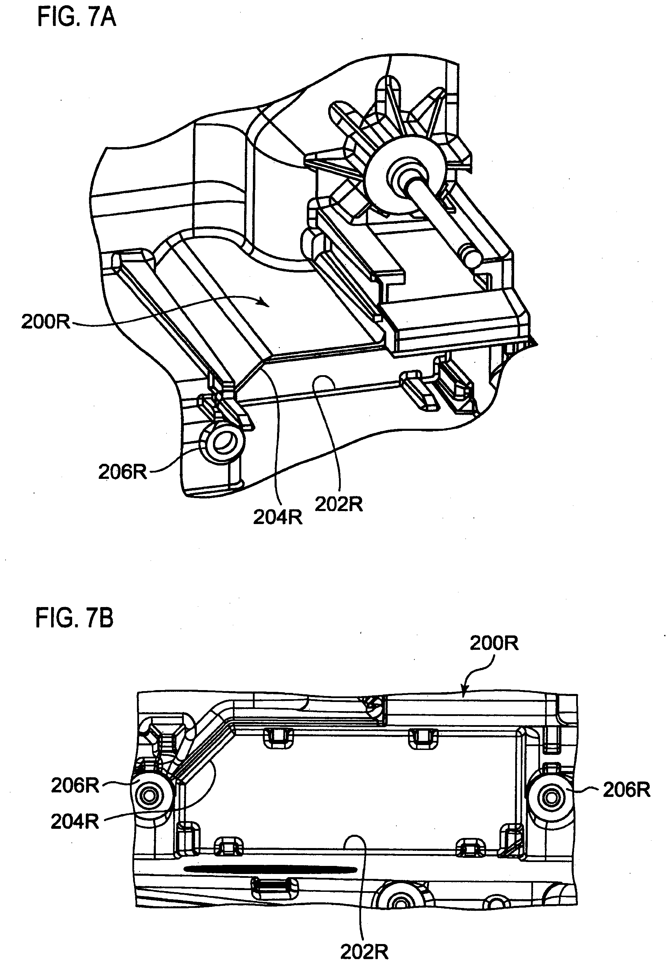

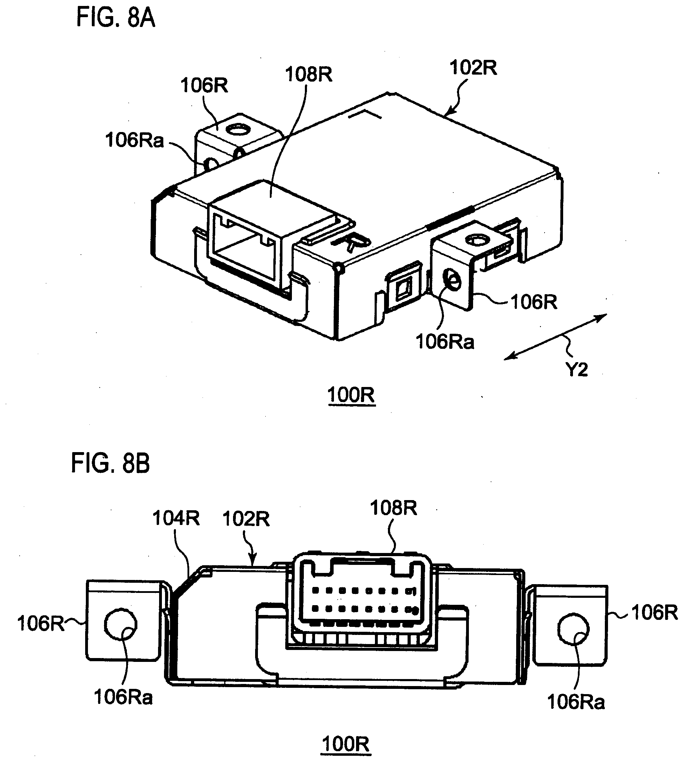

Fig. 6 is a perspective view showing a schematic structure in the vicinity of the accommodation chamber in the lamp body of the right side unit. Fig. 7A is an enlarged perspective view showing a portion in the vicinity of the accommodation chamber of the right side unit. Fig. 7B is an enlarged front view showing the portion in the vicinity of the accommodation chamber of the right side unit. Fig. 8A is a perspective view showing a schematic structure of the second control module. Fig. 8B is a front view showing a schematic structure of the second control module.

As shown in Fig. 6, Fig. 7A and Fig. 7B, the right side unit 1R includes the second accommodation chamber 200R in the lower space of the lamp body 2. The second accommodation chamber 200R is provided on an inner side surface of a bottom wall of the lamp body 2. The second control module 100R is accommodated in the second accommodation chamber 200R (see Fig. 6). The second control module 100R is inserted into and removed from the second accommodation chamber 200R in a direction indicated by an arrow Y2 in Fig. 6.

The second accommodation chamber 200R is formed with a second opening 202R through which the second control module 100R is removably inserted. In this embodiment, the second opening 202R faces the front side of the lamp. Also, the second opening 202R has a second right-left discrimination part 204R in a part of a contour shape of the second opening 202R. The second right-left discrimination part 204R allows the second control module 100R to enter through the second opening 202R and restricts the first control module 100L to enter through the second opening 202R. In this embodiment, the second opening 202R has a contour whose base shape is a rectangular shape. A part of the contour of the second opening 202R located inside the rectangular shape, which is the base shape, constitutes the second right-left discrimination part 204R. In this embodiment, the second right-left discrimination part 204R has a shape formed by chamfering a corner of the rectangular shape. Specifically, an upper left corner of the second opening 202R is chamfered when viewed from the front side of the lamp, to form the second right-left discrimination part 204R. The second right-left discrimination part 204L extends from an end of the second accommodation chamber 200R on the front side of the lamp to an end of the second accommodation chamber 200R on the rear side of the lamp. Insertion holes 206R for fixing the second control module are provided at predetermined positions on the outer periphery of the second accommodation chamber 200R.

As shown in Fig. 8A and Fig. 8B, the second control module 100R includes a housing 102R in which a substrate is accommodated. A circuit(s) and a device(s) such as a CPU, a ROM and a RAM are mounted on the substrate. The second control module 100R is a control unit that controls an operation of the right side unit 1R. More specifically, the second control module 100R controls turning on/off of the lamp units 10 to 12 contained in the right side unit 1R and controls the moving of the first shade 22 and the second shade 24 of the lamp unit 10 by controlling the driving of the shade driving parts 26.

A contour shape (see Fig. 8B) of the housing 102R in section perpendicular to the direction (the direction indicated by the arrow Y2 in Figs. 6 and 8A) in which the housing 102R is inserted into and removed from the second accommodation chamber 200R is similar to that of the second opening 202R. Therefore, the housing 102R includes a feature part 104R at a position, corresponding to the second right-left discrimination part 204R of the second opening 202R, on the contour thereof. Here, the feature part 104R has a shape corresponding to the second right-left discrimination part 204R. In this embodiment, the housing 102R has the contour whose base shape is a rectangular shape, and a part of the contour of the housing 102R located inside the rectangular shape, which is the base shape, constitutes the feature part 104R. In this embodiment, the feature part 104R has a shape formed by chamfering a corner of the rectangular shape. Specifically, an upper left corner of the housing 102R is chamfered when viewed from the front side of the lamp to form the feature part 104R. The feature part 104R extends from an end of the housing 102R on the front side of the lamp to an end of the housing 102R on the rear side of the lamp. The feature part 104R may be formed by bending a metal plate constituting the housing 102R, for example.

Attachment parts 106R having insertion holes 106Ra are provided at predetermined positions on the outer periphery of the housing 102R. Also, a connector 108R is mounted on the substrate accommodated in the housing 102R on the front side of the lamp and is exposed to the outside of the housing 102R.

When the second control module 100R is inserted into the second accommodation chamber 200R, a posture of the second control module 100R is determined such that the connector 108R faces the front side of the lamp and a position of the feature part 104R coincides with a position of the second right-left discrimination part 204R, that is, the feature part 104R is located on an upper left side when viewed from the front side of the lamp. Then, the second control module 100R enters the second accommodation chamber 200R through the second opening 202R in a state where the feature part 104R and the second right-left discrimination part 204R are engaged with each other. As shown in Fig. 6, the insertion holes 206R for fixing the second control module and the insertion holes 106Ra of the attachment parts 106R overlap with each other in a state where the second control module 100R is accommodated in the second accommodation chamber 200R, and the second control module 100R is fixed to the lamp body 2 by inserting the fastening member 300 into the insertion holes 106Ra, 206R. And, a connection terminal 302 is connected to the connector 108R.

As such, in the vehicle lamp device 1 according to this embodiment, the first right-left discrimination part 204L and the second right-left discrimination part 204R are respectively provided at different positions in the first opening 202L of the first accommodation chamber 200L and the second opening 202R of the second accommodation chamber 200R. Then, the housing 102L of the first control module 100L includes the feature part 104L at the position corresponding to the first right-left discrimination part 204L. The feature part 104L is similar in shape to the first right-left discrimination part 204L. Also, the housing 102R of the second control module 100R includes the feature part 104R at the position corresponding to the second right-left discrimination part 204R. The feature part 104R is similar in shape to the second right-left discrimination part 204R. Accordingly, although the contour shape of the first opening 202L is similar to that of the housing 102L and the contour shape of the second opening 202R is similar to that of the housing 102R, the contour shape of the first opening 202L is not similar to that of the housing 102R and the contour shape of the second opening 202R is not similar to that of the housing 102L.

Therefore, even if it is attempted to accommodate the first control module 100L in the second accommodation chamber 200R, the first control module 100L cannot be accommodated in the second accommodation chamber 200R because the second right-left discrimination part 204R restricts the housing 102L from entering. Similarly, even if it is attempted to accommodate the second control module 100R in the first accommodation chamber 200L, the second control module 100R cannot be accommodated in the first accommodation chamber 200L because the first right-left discrimination part 204L restricts the housing 102R from entering. Accordingly, it is possible to mount the first control module 100L for the left side unit 1L and the second control module 100R for the right side unit 1R on the suitable units, respectively. Meanwhile, the first right-left discrimination part 204L and the second right-left discrimination part 204R may be provided at the same positions when viewed from the front side of the lamp so long as the contour shapes of the first right-left discrimination part 204L and the second right-left discrimination part 204R are different from each other.

As described above, in the vehicle lamp device 1 according to this embodiment, the first opening 202L of the first accommodation chamber 200L provided in the left side unit 1L includes the first right-left discrimination part 204L in the part of the contour shape of the first opening 202L. The first right-left discrimination part 204L allows the first control module 100L for the left side unit 1L to enter through the first opening 202L and restricts the second control module 100R for the right side unit 1R from entering through the first opening 202L. Also, the second opening 202R of the second accommodation chamber 200R provided in the right side unit 1R includes the second right-left discrimination part 204R in the part of the contour shape of the second opening 202R. The second right-left discrimination part 204R allows the second control module 100R to enter through the second opening 202R and restricts the first control module 100L from entering through the second opening 202R. Thereby, it is possible to mount the control module for the right side unit and the control module for the left side unit on the suitable units.

Also, in the vehicle lamp device 1 according to this embodiment, the first opening 202L and the second opening 202R have the contours whose base shapes are the rectangular shapes. The first right-left discrimination part 204L and the second right-left discrimination part 204R are formed by chamfering the corners of the rectangular shapes. Thereby, the first right-left discrimination part 204L and the second right-left discrimination part 204R can be simply formed. Therefore, it is possible to suppress the complexity of the manufacturing process of the vehicle lamp device 1.

The invention is not limited to the above-described embodiments, and various modifications such as design change may be made to the embodiments based on the knowledge of those skilled in the art in so far as these modifications are included in the scope of the invention as defined in the appended claims.

## Claims

1. A vehicle lamp device comprising:
a left side unit (1L) to be disposed on a left side of a vehicle; and
a right side unit (1R) to be disposed on a right side of the vehicle, wherein
the left side unit (1L) includes
a first control module (100L) that controls an operation of the left side unit (1L), and
a first accommodation chamber (200L) formed with a first opening (202L) through which the first control module (100L) is configured to be removably inserted into the first accommodation chamber (200L), the first accommodation chamber (200L) accommodating the first control module (100L),
the right side unit (1R) includes
a second control module (100R) that controls an operation of the right side unit (1R), and
a second accommodation chamber (200R) formed with a second opening (202R) through which the second control module (100R) is configured to be removably inserted into the second accommodation chamber (200R), the second accommodation chamber (200R) accomodating the second control module (100R),
the first control module (100L) includes a housing (102L) having a contour shape in section perpendicular to a direction in which the first control module (100L) is removably inserted into the first accommodation chamber (200L),
the contour shape of the housing (102L) of the first control module (100L) is similar to a contour shape of the first opening (202L),
the second control module (100R) includes a housing (102R) having a contour shape in section perpendicular to a direction in which the second control module (100R) is removably inserted into the second accommodation chamber (200R),
the contour shape of the housing (102R) of the second control module (100R) is similar to a contour shape of the second opening (202R),
the first opening (202L) has, in a part of the contour shape thereof, a first right-left discrimination part (204L) that allows the first control module (100L) to enter the first accommodation chamber (200L) through the first opening (202L) and that restricts the second control module (100R) from entering the first accommodation chamber (200L) through the first opening (202L), and
the second opening (202R) has, in a part of the contour shape of thereof, a second right-left discrimination part (204R) that allows the second control module (100R) to enter the second accommodation chamber (200R) through the second opening (202R) and that restricts the first control module (100L) from entering the second accommodation chamber (200R) through the second opening (202R).

2. The vehicle lamp device according to claim 1, wherein
each of the first opening (202L) and the second opening (202R) has a contour whose base shape is a rectangular shape, and
each of the first right-left discrimination part (204L) and the second right-left discrimination part (204R) is formed by chamfering a corner of the corresponding rectangular shape.

## Patentansprüche

1. Fahrzeuglampenvorrichtung, umfassend:
eine linke Seiteneinheit (1L), die auf einer linken Seite eines Fahrzeugs anzuordnen ist, und
eine rechte Seiteneinheit (1R), die auf einer rechten Seite des Fahrzeugs anzuordnen ist, wobei
die linke Seiteneinheit (1L) beinhaltet:
ein erstes Steuermodul (100L), das einen Betrieb der linken Seiteneinheit (1L) steuert, und
eine erste Aufnahmekammer (200L), die mit einer ersten Öffnung (202L) gebildet ist, durch die das erste Steuermodul (100L) dazu ausgestaltet ist, abnehmbar in die erste Aufnahmekammer (200L) eingeführt zu werden, wobei die erste Aufnahmekammer (200L) das erste Steuermodul (100L) aufnimmt,
die rechte Seiteneinheit (1R) beinhaltet:
ein zweites Steuermodul (100R), das einen Betrieb der rechten Seiteneinheit (1R) steuert, und
eine zweite Aufnahmekammer (200R), die mit einer zweiten Öffnung (202R) gebildet ist, durch die das zweite Steuermodul (100R) dazu ausgestaltet ist, abnehmbar in die zweite Aufnahmekammer (200R) eingeführt zu werden, wobei die zweite Aufnahmekammer (200R) das zweite Steuermodul (100R) aufnimmt,
das erste Steuermodul (100L) ein Gehäuse (102L) beinhaltet, das eine Konturform im Querschnitt senkrecht zu einer Richtung aufweist, in der das erste Steuermodul (100L) abnehmbar in die erste Aufnahmekammer (200L) eingeführt wird,
die Konturform des Gehäuses (102L) des ersten Steuermoduls (100L) einer Konturform der ersten Öffnung (202L) ähnlich ist,
das zweite Steuermodul (100R) ein Gehäuse (102R) beinhaltet, das eine Konturform im Querschnitt senkrecht zu einer Richtung aufweist, in der das zweite Steuermodul (100R) abnehmbar in die zweite Aufnahmekammer (200R) eingeführt wird,
die Konturform des Gehäuses (102R) des zweiten Steuermoduls (100R) einer Konturform der zweiten Öffnung (202R) ähnlich ist,
die erste Öffnung (202L) in einem Teil ihrer Konturform einen ersten Rechts-Links-Unterscheidungsteil (204L) aufweist, der es dem ersten Steuermodul (100L) erlaubt, in die erste Aufnahmekammer (200L) durch die erste Öffnung (202L) einzudringen und der das Eindringen des zweiten Steuermoduls (100R) in die erste Aufnahmekammer (200L) durch die erste Öffnung (202L) einschränkt, und
die zweite Öffnung (202R) in einem Teil ihrer Konturform einen zweiten Rechts-Links-Unterscheidungsteil (204R) aufweist, der es dem zweiten Steuermodul (100R) erlaubt, in die zweite Aufnahmekammer (200R) durch die zweite Öffnung (202R) einzudringen und der das Eindringen des ersten Steuermoduls (100L) in die zweite Aufnahmekammer (200R) durch die zweite Öffnung (202R) einschränkt.

2. Fahrzeuglampenvorrichtung nach Anspruch 1, wobei
jede von der ersten Öffnung (202L) und der zweiten Öffnung (202R) eine Kontur aufweist, deren Basisform eine rechteckige Form ist, und
jede von dem ersten Rechts-Links-Unterscheidungsteil (204L) und dem zweiten Rechts-Links-Unterscheidungsteil (204R) durch Abschrägen einer Ecke der entsprechenden rechteckigen Form gebildet wird.

## Revendications

1. Dispositif de lampe de véhicule comprenant :
une unité côté gauche (1L) destinée à être disposée sur un côté gauche d'un véhicule ; et
une unité côté droit (1R) destinée à être disposée sur un côté droit du véhicule ; dans lequel l'unité côté gauche (1L) comprend :
un premier module de commande (100L) qui commande une opération de l'unité côté gauche (1L), et
une première chambre de réception (200L) formée avec une première ouverture (202L) à travers laquelle le premier module de commande (100L) est configuré pour être inséré de manière amovible à l'intérieur de la première chambre de réception (200L), la première chambre de réception (200L) recevant le premier module de commande (100L),
l'unité côté droit (1R) comprend
un second module de commande (100R) qui commande une opération de l'unité côté droit (1R), et
une seconde unité de réception (200R) formée avec une seconde ouverture (202R) à travers laquelle le second module de commande (100R) est configuré pour être inséré de manière amovible à l'intérieur de la seconde chambre de réception (200R), la seconde chambre de réception (200R) recevant le second module de commande (100R),
le premier module de commande (100L) comprend un boîtier (102L) ayant une forme de contour en section perpendiculaire à une direction dans laquelle le premier module de commande (100L) est inséré de manière amovible dans la première chambre de réception (200L),
la forme de contour du boîtier (102L) du premier module de commande (100L) est similaire à une forme de contour de la première ouverture (202L),
le second module de commande (100R) comprend un boîtier (102R) ayant une forme de contour en section perpendiculaire à une direction dans laquelle le second module de commande (100R) est inséré de manière amovible dans la seconde chambre de réception (200R),
la forme de contour du boîtier (102R) du second module de commande (100R) est similaire à une forme de contour de la seconde ouverture (202R),
la première ouverture (202L) a, dans une partie de sa forme de contour, une première partie de distinction droit-gauche (204L) qui permet au premier module de commande (100L) d'entrer dans la première chambre de réception (200L) à travers la première ouverture (202L) et qui empêche le second module de commande (100R) d'entrer dans la première chambre de réception (200L) à travers la première ouverture (202L), et
la seconde ouverture (202R) a, dans une partie de sa forme de contour, une seconde partie de distinction droit-gauche (204R) qui permet au second module de commande (100R) d'entrer dans la seconde chambre de réception (200R) à travers la seconde ouverture (202R) et qui empêche le premier module de commande (100L) d'entrer dans la seconde chambre de réception (200R) à travers la seconde ouverture (202R).

2. Dispositif de lampe de véhicule selon la revendication 1, dans lequel
chacune des ouvertures de la première ouverture (202L) et de la seconde ouverture (202R) a un contour dont la forme de base est une forme rectangulaire, et
chacune des parties de la première partie de distinction gauche-droit (204L) et de la seconde partie de distinction gauche-droit (204R) est formée en chanfreinant un coin de la forme rectangulaire correspondante.
